# EUROPEAN PATENT APPLICATION

(11) **EP 3 421 125 A1**
(43) Date of publication of application: **02.01.2019**
(21) Application number: 17773594.1
(22) Date of filing: 26.01.2017
(51) Int. Cl.: B01J 19/32, B01D 53/50, B01D 53/78

(54) **FILLER FOR PACKED TOWER AND SEAWATER DESULFURIZATION DEVICE**

(30) Priority: 31.03.2016 JP 2016072651
(71) Applicant: Mitsubishi Hitachi Power Systems, Ltd., Yokohama-shi, Kanagawa 220-8401 (JP)
(72) Inventor: YOSHIMOTO, Takashi, Tokyo 108-8215 (JP); YAMADA, Kairi, Tokyo 108-8215 (JP); HIRAYAMA, Koichiro, Tokyo 108-8215 (JP); KAMIYAMA, Naoyuki, Tokyo 108-8215 (JP); KAGAWA, Seiji, Tokyo 108-8215 (JP); TAKEUCHI, Yasuhiro, Yokohama-shi Kanagawa 220-8401 (JP); SASAKI, Ryozo, Yokohama-shi Kanagawa 220-8401 (JP)
(74) Representative: Henkel, Breuer & Partner
(86) International application number: PCT/JP2017/002695
(87) International publication number: WO 2017/169045

(57) **Abstract**

The present invention helps prevent a reduction in gas-water contact efficiency using a simple structure. A filler (11B) is a filler for a packed tower that is provided inside a packed tower and removes sulfur from water by allowing waste gas to pass through the inside thereof while allowing water that has been sprayed from above in a vertical direction to pass through the inside thereof and allowing the waste gas to contact the water. The filler (11B) has a first plate unit (64) that has a plurality of plate parts (62A) that extend in the vertical direction and are provided at a prescribed interval, and a second plate unit that has a plurality of plate parts (72) that intersect the plate parts (62) of the first plate unit (64), extend in the vertical direction and are provided at a prescribed interval, the second plate unit forming, together with the first plate unit (64), a lattice part (69) that is open at both ends in the vertical direction. The thickness of each plate part (62) decreases from an upper end surface (66) thereof to a lower end surface (67) thereof in the vertical direction.

## Description

### Field

The present invention relates to a filler for a packed tower and a seawater desulfurization device. Background

In recent years, a thermal power station that is provided with a seawater desalination plant has been increasing. A desulfurization device is also provided to remove sulfur content contained in flue gas that is generated when fossil fuel such as coal is burned. Seawater desulfurization for performing desulfurization by utilizing seawater as an absorbent has been attracting attention from a viewpoint that a power plant and the like are built at a place on the sea front in many cases because a large amount of coolant water is required, and operation cost for desulfurization processing can be kept low. The seawater desulfurization device using seawater as an absorbent is used in a thermal power station and the like because cost thereof is lower than that of a limestone-gypsum method.

For example, as disclosed in Patent Literature 1, the seawater desulfurization device includes a flue gas desulfurization absorber (packed tower). The flue gas desulfurization absorber is a tower in which a porous filler is arranged. The flue gas desulfurization absorber distributes seawater from an upper side in a vertical direction of the filler to cause the seawater to pass through the filler. The flue gas desulfurization absorber causes the flue gas to pass through the filler. Accordingly, the seawater and the flue gas are brought into gas-liquid contact with each other inside the filler, and the sulfur content in the flue gas is absorbed into the seawater.

### Citation List

### Patent Literature

Patent Literature 1: Japanese Patent No. 5754877 Summary

### Technical Problem

The filler is required to reduce an amount of absorbent (seawater) while securing a desulfurization amount by enhancing gas-liquid contact efficiency. The gas-liquid contact efficiency can be enhanced by increasing a surface area of the filler, but the filler is required to have a complicated shape in this case. Accordingly, production cost may be increased, or a pressure loss may be increased.

The present invention has been made in view of such a situation, and an object of the present invention is to provide a filler for a packed tower and a seawater desulfurization device for preventing the gas-liquid contact efficiency from being lowered with a simple structure.

### Solution to Problem

To solve the problem described above and achieve the object, a filler according to this disclosure is for a packed tower that causes water to pass through the filler when the water is sprinkled from an upper side in a vertical direction, and causes flue gas to pass through the filler, to bring the flue gas into contact with the water to desulfurize the flue gas. The filler is arranged inside the packed tower, and includes a first plate unit including a plurality of plate parts that extend in the vertical direction and are arranged at predetermined intervals; and a second plate unit including a plurality of plate parts that intersect with the plate parts of the first plate unit, extend in the vertical direction, and are arranged at predetermined intervals, the second plate unit forming, together with the first plate unit, a grid part both end parts of which along the vertical direction are opened. A thickness of each plate part is reduced from an upper end face in the vertical direction toward a lower end face.

The filler is constituted of the first plate unit and the second plate unit as a simple structure. A thickness of the filler at the upper end face is larger than a thickness thereof at the lower end face. Thus, the filler can increase a rebounding amount of water to enhance gas-liquid contact efficiency.

In the filler, an end face of the plate part on an upper side in the vertical direction is preferably perpendicular to the vertical direction. The end face on the upper side in the vertical direction of the filler is perpendicular to the vertical direction, so that the rebounding amount of water can be increased, and the gas-liquid contact efficiency can be enhanced more appropriately.

In the filler, the plate part preferably includes a groove part on an end face on an upper side in the vertical direction. The filler has a groove part on the end face on the upper side in the vertical direction, so that the rebounding amount of water can be increased, and the gas-liquid contact efficiency can be enhanced more appropriately.

In the filler, it is preferable that a first filling part including the first plate unit and the second plate unit, and a second filling part including the first plate unit and the second plate unit are stacked along the vertical direction, and a plate part of the first plate unit included in the second filling part is arranged at a position shifted from a position of a plate part of the first plate unit included in the first filling part in a horizontal direction perpendicular to the vertical direction. The filler can cause water rebounded from the plate part of the first filling part to easily hit the plate part of the second filling part. Thus, the filler can further enhance the gas-liquid contact efficiency.

In the filler, it is preferable that a plurality of filling units each including the first filling part and the second filling part are stacked along the vertical direction, and in the filling units adjacent to each other along the vertical direction, plate parts included in the first plate unit of the first filling part are arranged to be located directly above each other in the horizontal direction, and plate parts included in the first plate unit of the second filling part are arranged to be located directly above each other in the horizontal direction. The filler facilitates causing water flowing on the surface of the plate part to be dropped onto the plate part included in the filling unit on a lower side in the vertical direction. Thus, the filler can further enhance the gas-liquid contact efficiency.

In the filler, the plate part preferably includes a projection part on each of surfaces extending in the vertical direction, the projection part extending from one side surface to the other side surface of the plate part in a direction away from the surface. The filler has a projection part, so that the gas-liquid contact efficiency can be further enhanced.

To solve the problem described above and achieve the object, a filler according to this disclosure is for a packed tower that causes water to pass through the filler when the water is sprinkled from an upper side in a vertical direction, and causes flue gas to pass through the filler, to bring the flue gas into contact with the water to desulfurize the flue gas. The filler is arranged inside the packed tower, and includes a first plate unit including a plurality of plate parts that extend in the vertical direction and are arranged at predetermined intervals; and a second plate unit including a plurality of plate parts that intersect with the plate parts of the first plate unit, extend in the vertical direction, and are arranged at predetermined intervals, the second plate unit forming, together with the first plate unit, a grid part both end parts of which along the vertical direction are opened. The plate part includes a projection part on each of surfaces extending in the vertical direction, the projection part extending from one side part to the other side part of the plate part in a direction away from the surface. An angle between an upper surface of the projection part in the vertical direction and the vertical direction is equal to or larger than 90 degrees and smaller than 180 degrees.

The filler can enhance the gas-liquid contact efficiency with a simple structure by increasing a rebounding amount of water by the projection part.

In the filler, the projection part is preferably arranged on an upper end face of the plate part in the vertical direction. Thus, the filler can cause a larger amount of water to hit the projection part, so that the rebounding amount can be increased, and the gas-liquid contact efficiency can be enhanced more appropriately.

In the filler, a lower surface of the projection part in the vertical direction is preferably tilted upward in the vertical direction from a terminal part connected to the plate part toward a distal end part.

To solve the problem described above and achieve the object, a filler according to this disclosure is for a packed tower that causes water to pass through the filler when the water is sprinkled from an upper side in a vertical direction, and causes flue gas to pass through the filler, to bring the flue gas into contact with the water to desulfurize the flue gas. The filler is arranged inside the packed tower, and includes a first filling part that includes a first plate unit including a plurality of plate parts that extend in the vertical direction and are arranged at predetermined intervals, and a second plate unit including a plurality of plate parts that intersect with the plate parts of the first plate unit, extend in the vertical direction, and are arranged at predetermined intervals, the second plate unit forming, together with the first plate unit, a grid part both end parts of which along the vertical direction are opened; a second filling part that includes the first plate unit and the second plate unit; and an opening plate part as a plate-shaped member having a plane surface in which a plurality of openings penetrate in a grid-like fashion. The first filling part and the second filling part are stacked along the vertical direction across the opening plate part. A distance between center axes of the openings adjacent to each other is equal to a distance between center axes of grid parts adjacent to each other, and a thickness between a side surface of the opening and a side surface adjacent to the opening is larger than a thickness of the plate part.

In the filler, the thickness between the openings of the opening plate part is larger than the thickness of the plate part. In the filler, a pitch of the opening (a distance between center axes) is equal to a pitch of the grid part. Thus, in the filler, water can easily hit the opening plate part, so that the rebounding amount of water can be increased, and the gas-liquid contact efficiency can be enhanced with a simpler structure.

In the filler, a length of the opening plate part along the vertical direction is preferably shorter than a length of the first filling part and the second filling part along the vertical direction. In the filler, opening plate parts having a small thickness and a simple structure are stacked. Thus, the filler can efficiently enhance the gas-liquid contact efficiency with a simpler structure.

In the filler, the center axis of the opening in the opening plate part is preferably identical to the center axis of the grid part of the first filling part or the second filling part adjacent to the opening on a lower side in a vertical direction. In the filler, water can easily hit the opening plate part, so that the rebounding amount of water can be increased, and the gas-liquid contact efficiency can be enhanced.

In the filler, the center axis of the opening in the opening plate part is preferably arranged to be shifted from a position of the center axis of the grid part of the first filling part or the second filling part adjacent to the opening on a lower side in a vertical direction. In the filler, water can easily hit the opening plate part, so that the rebounding amount of water can be increased, and the gas-liquid contact efficiency can be enhanced.

To solve the above problems and achieve the object, the desulfurization device for flue gas according to the present disclosure includes the filler for a packed tower. The desulfurization device includes the filler, so that the gas-liquid contact efficiency can be enhanced with a simple structure.

### Advantageous Effects of Invention

According to the present invention, gas-liquid contact efficiency can be prevented from being lowered with a simple structure.

### Brief Description of Drawings

FIG. 1 is a schematic diagram illustrating a configuration of a seawater desulfurization device according to a first embodiment.
FIG. 2 is a perspective view of a filler according to the first embodiment.
FIG. 3 is a cross-sectional view of the filler according to the first embodiment viewed from the direction S in FIG. 2.
FIG. 4 is a cross-sectional view of the filler according to the first embodiment viewed from the direction T in FIG. 2.
FIG. 5 is an explanatory diagram for explaining rebounding of seawater.
FIG. 6 is a schematic diagram illustrating another example of a plate part according to the first embodiment.
FIG. 7 is a schematic diagram illustrating another example of the plate part according to the first embodiment.
FIG. 8 is a cross-sectional view of a filling part according to a second embodiment.
FIG. 9 is a cross-sectional view of the filling part according to the second embodiment.
FIG. 10 is a diagram illustrating another configuration example of a projection part according to the second embodiment.
FIG. 11 is a diagram illustrating another configuration example of the projection part according to the second embodiment.
FIG. 12 is a diagram illustrating another configuration example of the projection part according to the second embodiment.
FIG. 13 is a schematic diagram illustrating another example of a plate part according to the second embodiment.
FIG. 14 is a cross-sectional view of a filling part according to a third embodiment.
FIG. 15 is a cross-sectional view of the filling part according to the third embodiment.
FIG. 16 is a top view of the filling part according to the third embodiment.
FIG. 17 is a diagram illustrating another example of the filler according to the third embodiment.

### Description of Embodiments

The following describes preferred embodiments of the present invention in detail with reference to the attached drawings. The present invention is not limited to the embodiments. In a case in which there are a plurality of embodiments, the embodiments may be combined with each other.

### First embodiment

### Entire structure of seawater desulfurization device

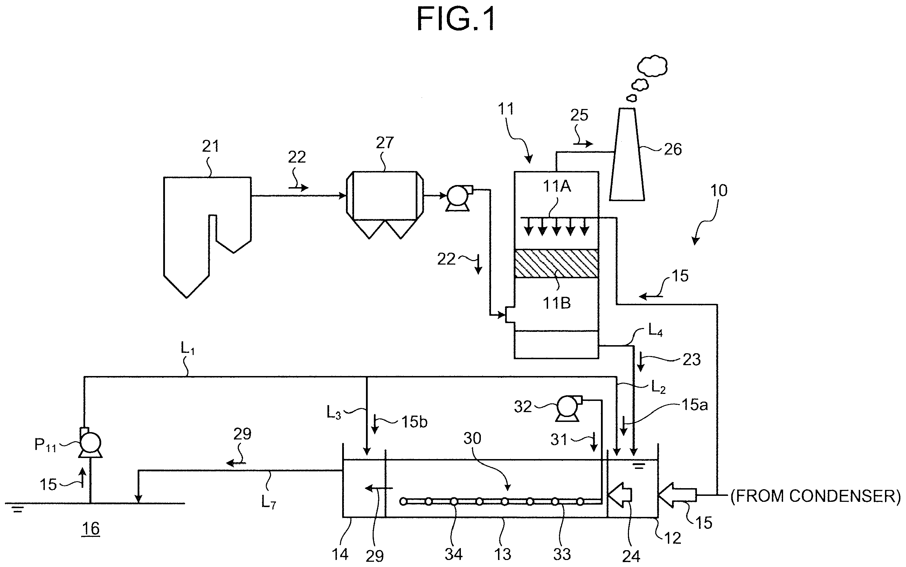

FIG. 1 is a schematic diagram illustrating a configuration of a seawater desulfurization device according to a first embodiment. As illustrated in FIG. 1, a seawater desulfurization device 10 (desulfurization device) according to the first embodiment includes a packed tower 11 (flue gas desulfurization absorber), an inlet-side diluting and mixing basin 12, an oxidation basin 13 for performing processing of recovering water quality, and an outlet-side diluting and mixing basin 14.

In the present embodiment, as seawater 15 used for the packed tower 11 and the seawater 15 used for modifying water quality by the oxidation basin 13 that performs processing of recovering water quality, used is seawater after being separately pumped up and used for cooling by a condenser (not illustrated) in a boiler 21, and before being discharged to the sea 16.

The seawater 15 for dilution is pumped up from the sea 16 by a pump P₁₁ via a seawater supply line L₁, and partial seawater 15a is supplied to the inlet-side diluting and mixing basin 12 by the pump P₁₁ via a seawater supply line L₂. A dilution seawater supply line L₃ is arranged for supplying seawater 15b for dilution to the outlet-side diluting and mixing basin 14 as needed. In the present embodiment, cooled seawater from the condenser (not illustrated) is used, but the present invention is not limited thereto. Seawater that is directly pumped up by the pump P₁₁ from the sea 16 may be used.

The packed tower 11 is a tower that brings flue gas 22 from the boiler 21 into gas-liquid contact with the seawater 15 to clean the flue gas 22. The packed tower 11 includes a sprinkler device 11A and a filler 11B therein. The sprinkler device 11A sprinkles the seawater 15 toward the filler 11B from an upper side in a vertical direction of the filler 11B. The seawater 15 passes through the filler 11B. The flue gas 22 is supplied to the packed tower 11 from the boiler 21. The flue gas 22 is caused to pass through the filler 11B. The flue gas 22 is brought into gas-liquid contact with the seawater 15 within the filler 11B, and a sulfur component in the flue gas 22 is absorbed into the seawater 15. Due to this, the flue gas 22 is desulfurized. The sprinkler device 11A may have any configuration that supplies the seawater 15 to the filler 11B from the upper side in the vertical direction of the filler 11B. For example, in the present embodiment, the sprinkler device 11A is arranged on the upper side in the vertical direction of the filler 11B, and sprinkles (jets) the seawater in a vertically downward direction, but the direction in which the seawater is jetted is not limited to the vertically downward direction. That is, the direction in which the seawater is jetted (supplied), that is, a traveling direction of the seawater jetted from the sprinkler device 11A is optional so long as the sprinkler device 11A jets (supplies) the seawater to the filler 11B from the upper side in the vertical direction of the filler 11B.

The packed tower 11 brings the flue gas 22 into gas-liquid contact with the seawater 15 to cause a reaction as represented by the following Equation (1), causes the seawater 15 to absorb sulfur content such as SOx contained in a form of SO₂ and the like in the flue gas 22, and removes the sulfur content in the flue gas 22 using the seawater 15.

SO₂ (G) + H₂O → H₂SO₃ (L) → HSO₃⁻ + H⁺ (1)

Through the seawater desulfurization, H₂SO₃ that is generated through gas-liquid contact between the seawater 15 and the flue gas 22 dissociates and a hydrogen ion (H⁺) is released into the seawater 15, so that a pH is lowered, and a large amount of sulfur content is absorbed into sulfur content absorption seawater 23. Thus, the sulfur content absorption seawater 23 contains high-concentration sulfur content.

At this point, the pH of the sulfur content absorption seawater 23 is, for example, about 3 to 6. The sulfur content absorption seawater 23 that has absorbed sulfur content in the packed tower 11 is stored in a tower bottom part of the packed tower 11. The sulfur content absorption seawater 23 stored in the tower bottom part of the packed tower 11 is supplied to the inlet-side diluting and mixing basin 12 via a sulfur content absorption seawater discharge line L₄. The sulfur content absorption seawater 23 supplied to the inlet-side diluting and mixing basin 12 is mixed with the seawater 15 from the condenser and the seawater 15a for dilution that are supplied to the inlet-side diluting and mixing basin 12 to be diluted, and becomes acidic mixed seawater 24.

Cleaned gas 25 desulfurized in the packed tower 11 is discharged to the atmosphere through a stack 26. A dust collection unit 27 is arranged between the boiler 21 and the packed tower 11, and removes ash dust and the like from the flue gas 22.

A desulfurization ratio of the flue gas 22 is separately adjusted based on a ratio between inlet SO₂ concentration and outlet SO₂ concentration (outlet SO₂ concentration/inlet SO₂ concentration) in the flue gas 22 supplied to the packed tower 11, and seawater properties of the seawater 15 for desulfurization and the sulfur content absorption seawater 23.

At an inlet and an outlet for the flue gas 22 of the packed tower 11, an SO₂ concentration meter is arranged for measuring inlet SO₂ concentration and outlet SO₂ concentration of the flue gas 22.

The acidic mixed seawater 24 obtained by mixing the sulfur content absorption seawater 23 with the seawater 15 is supplied to the oxidation basin 13 arranged on a downstream side of the inlet-side diluting and mixing basin 12. In the oxidation basin 13, arranged is a diffuser 30 for seawater desulfurization serving as an aeration unit that performs processing of recovering water quality of the acidic mixed seawater 24.

The diffuser 30 for seawater desulfurization includes an air blower for oxidation 32 serving as an air introduction unit that supplies air 31, an air supply pipe 33 that supplies the air 31, a diffuser tube 34 branched off from the air supply pipe 33, and a hole for jetting for supplying the air 31 to the acidic mixed seawater 24 within the oxidation basin 13.

The outside air 31 is supplied into the oxidation basin 13 through a hole via the diffuser tube 34 by the air blower for oxidation 32, and oxygen is dissolved as represented by the following Equation (2). In the oxidation basin 13, the sulfur content in the acidic mixed seawater 24 is brought into contact with the air 31 to cause an oxidation reaction of a bisulfite ion (HSO₃⁻) and a decarboxylation reaction of a bicarbonate ion (HCO₃⁻) as represented by the following Equations (3) to (5), and water quality of the acidic mixed seawater 24 is recovered to make water quality recovered seawater 29, which is discharged to the sea 16 via a discharge line L₇.

O₂ (G) → O₂ (L) (2)

HSO₃⁻ + 1/2O₂ → SO₄²⁻ + H⁺ (3)

HCO₃⁻ + H⁺ → CO₂ (G) + H₂O (4)

CO₃²⁻ + 2H⁺ → CO₂ (G) + H₂O (5)

Due to this, the pH of the acidic mixed seawater 24 can be raised, and chemical oxygen demand (COD) can be reduced. Accordingly, the water quality recovered seawater 29 can be discharged while causing the pH, dissolved oxygen (DO) concentration, and the chemical oxygen demand (COD) of the water quality recovered seawater 29 to be at a level that can be discharged to the sea 16.

### Filler

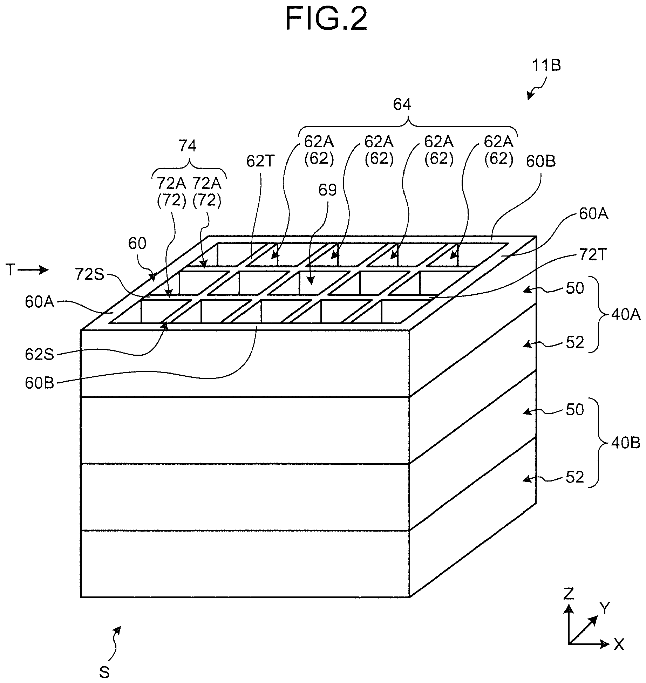

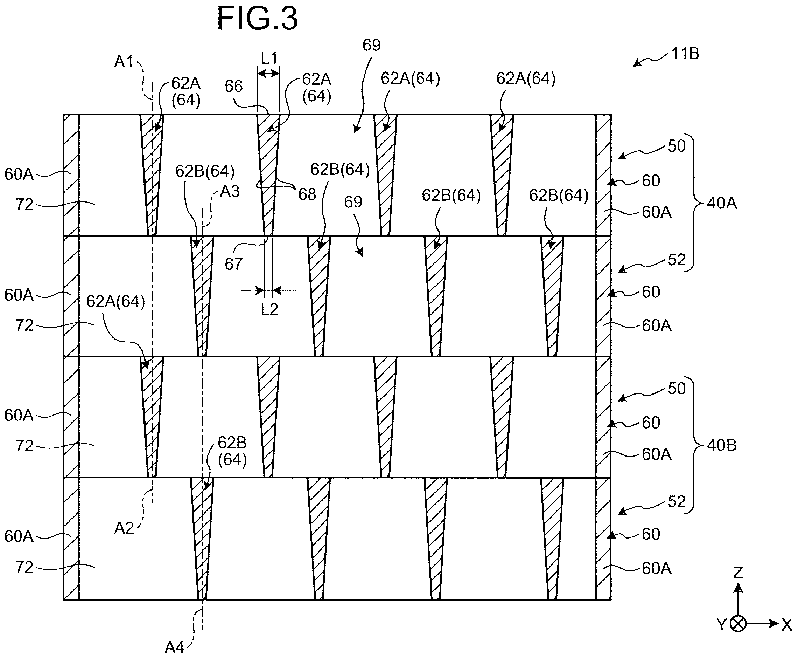

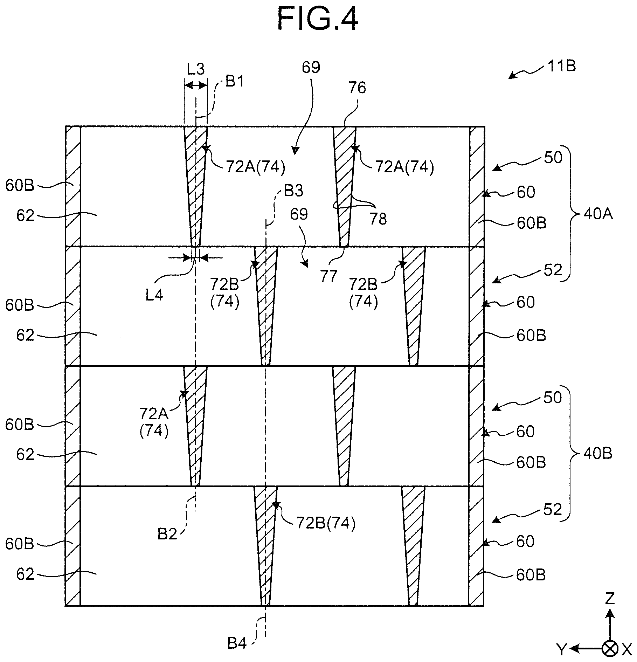

Next, the following describes the filler 11B arranged within the packed tower 11. FIG. 2 is a perspective view of the filler according to the first embodiment. FIG. 3 is a cross-sectional view of the filler according to the first embodiment viewed from the direction S in FIG. 2. FIG. 4 is a cross-sectional view of the filler according to the first embodiment viewed from the direction T in FIG. 2. As illustrated in FIG. 2, the filler 11B includes a filling unit 40A and a filling unit 40B. Hereinafter, a direction orthogonal to a direction X as a predetermined direction is assumed to be a direction Y, and a direction orthogonal to the direction X and the direction Y is assumed to be a direction Z. When the filler 11B is attached to the inside of the packed tower 11, the direction Z is a vertical direction, and the direction X and the direction Y are horizontal directions. The direction S corresponds to the direction Y, and the direction T corresponds to the direction X.

The filling unit 40A includes a first filling part 50 and a second filling part 52. The first filling part 50 includes an outer frame part 60, a first plate unit 64, and a second plate unit 74. As illustrated in FIG. 2, the outer frame part 60 includes a first outer frame part 60A and a second outer frame part 60B. The first outer frame part 60A is a plate-shaped member extending along the direction Y. Two first outer frame parts 60A are opposed to each other in the direction X. The second outer frame part 60B is a plate-shaped member extending along the direction X. Two second outer frame parts 60B are opposed to each other along the direction Y. In the outer frame part 60, a space surrounded by the two first outer frame parts 60A and the two second outer frame parts 60B has a rectangular shape. The lengths of the first outer frame part 60A and the second outer frame part 60B may be the same, or any of the lengths thereof may be longer.

As illustrated in FIG. 2 and FIG. 3, the first plate unit 64 includes a plate part 62A. The plate part 62A is a plate-shaped member extending in the direction Z from a lower end face 67 as an end face on a lower side along the direction Z (opposite side of the direction Z) to an upper end face 66 as an end face on an upper side along the direction Z (direction Z side). As illustrated in FIG. 2, the plate part 62A extends toward the direction Y from a side surface 62S as one side surface along the direction Y to the other side surface 62T. In the plate part 62A, the side surface 62S is fixed to one of the second outer frame parts 60B, and the side surface 62T is fixed to the other one of the second outer frame parts 60B.

As illustrated in FIG. 3, the upper end face 66 is a face perpendicular to the direction Z, that is, a face parallel with the direction X and the direction Y. A thickness of the plate part 62A, that is, a length thereof along the direction X becomes smaller from the upper end face 66 toward the lower end face 67. The thickness of the plate part 62A at the upper end face 66, that is, the length along the direction X at the upper end face 66 is assumed to be a length L1. The thickness of the plate part 62A at the lower end face 67, that is, the length along the direction X at the lower end face 67 is assumed to be L2. The length L1 is longer than the length L2 in the plate part 62A. More specifically, the length L1 is preferably 1.5 times or more the length L2.

In the present embodiment, in the first plate unit 64, a plurality of plate parts 62A described above are arranged at predetermined intervals along the direction X. The first plate unit 64 includes four plate parts 62A, but there can be any number of plate parts 62A.

As illustrated in FIG. 2 and FIG. 4, the second plate unit 74 includes a plate part 72A. The plate part 72A is a plate-shaped member extending toward the direction Z from a lower end face 77 as an end face on a lower side along the direction Z (opposite side of the direction Z) to an upper end face 76 as an end face on an upper side along the direction Z (direction Z side). The plate part 72A extends while intersecting with (herein, being orthogonal to) the plate part 62A. Specifically, as illustrated in FIG. 2, the plate part 72A extends in the direction X from a side surface 72S as one side surface along the direction X to the other side surface 72T. In the plate part 72A, the side surface 72S is fixed to one of the first outer frame parts 60A, and the side surface 72T is fixed to the other one of the first outer frame parts 60A.

The upper end face 76 is a face perpendicular to the direction Z, that is, a face parallel with the direction X and the direction Y. As illustrated in FIG. 4, a thickness of the plate part 72A, that is, a length thereof along the direction Y becomes smaller from the upper end face 76 toward the lower end face 77. The thickness of the plate part 72A at the upper end face 76, that is, the length along the direction Y at the upper end face 76 is assumed to be a length L3. The thickness of the plate part 72A at the lower end face 77, that is, the length along the direction Y at the lower end face 77 is assumed to be a length L4. The length L3 is longer than the length L4 in the plate part 72A. More specifically, the length L3 is preferably 1.5 times or more the length L4.

In the present embodiment, in the second plate unit 74, a plurality of plate parts 72A described above are arranged at predetermined intervals along the direction Y. The second plate unit 74 includes two plate parts 72A, but there can be any number of plate parts 72A.

The first plate unit 64 and the second plate unit 74 form a grid part 69 as a space surrounded by two plate parts 62A and the two plate parts 72A. Side surfaces of the grid part 69 along the directions X and Y are surrounded by the plate parts 62A and 72A, and both end parts thereof along the direction Z are opened.

Similarly to the first filling part 50, the second filling part 52 includes the outer frame part 60, the first plate unit 64, and the second plate unit 74. However, as illustrated in FIG. 3, the first plate unit 64 included in the second filling part 52 includes a plate part 62B. A distance from the plate part 62B to the outer frame part 60 (first outer frame part 60A) along the direction X is different from a distance from the plate part 62A included in the first filling part 50 to the outer frame part 60 (first outer frame part 60A) along the direction X. The plate part 62B is the same as the plate part 62A in other respects. As illustrated in FIG. 4, the second plate unit 74 included in the second filling part 52 includes a plate part 72B. A distance from the plate part 72B to the outer frame part 60 (second outer frame part 60B) along the direction Y is different from a distance from the plate part 72 included in the first filling part 50 to the outer frame part 60 (second outer frame part 60B) along the direction Y. The plate part 72B is the same as the plate part 72A in other respects. That is, in the second filling part 52, the distance from the plate part 62B to the outer frame part 60 along the direction X and the distance from the plate part 72B to the outer frame part 60 along the direction Y are different from those in the first filling part 50. The second filling part 52 has the same structure as that of the first filling part 50 in other respects. Hereinafter, in a case in which the plate part 62A is not distinguished from the plate part 62B, they are referred to as a plate part 62. In a case in which the plate part 72A is not distinguished from the plate part 72B, they are referred to as a plate part 72.

In the filling unit 40A, the first filling part 50 and the second filling part 52 are stacked along the direction Z. In the filling unit 40A, a bottom face opposite to the direction Z of the outer frame part 60 of the first filling part 50 is placed over an upper surface on the direction Z side of the outer frame part 60 of the second filling part 52. In the filling unit 40A, the grid part 69 in the first filling part 50 communicates with the grid part 69 in the second filling part 52. As illustrated in FIG. 3, in the filling unit 40A, the plate part 62B included in the second filling part 52 is arranged at a position shifted from the plate part 62A included in the first filling part 50 in the direction X. In other words, in the filling unit 40A, the plate part 62A is not arranged on an extension line of the plate part 62B along the direction Z. In the filling unit 40A, the plate part 62B is arranged in a region adjacent, along the direction X, to a region on an extension line of the plate part 62A along the direction Z.

As illustrated in FIG. 4, in the filling unit 40A, the plate part 72B included in the second filling part 52 is arranged at a position shifted from the plate part 72A included in the first filling part 50 in the direction Y. In other words, in the filling unit 40A, the plate part 72B is not arranged on an extension line of the plate part 72A along the direction Z. In the filling unit 40A, the plate part 72B is arranged in a region adjacent, along the direction Y, to a region on an extension line of the plate part 72A along the direction Z.

In this way, in the filling unit 40A, plate parts 62 included in the first filling part 50 and the second filling part 52 are arranged at positions shifted from each other in the direction X, and plate parts 72 included in the first filling part 50 and the second filling part 52 are arranged at positions shifted from each other in the direction Y. Alternatively, in the filling unit 40A, only one group of the plate parts 62 and the plate parts 72 may be arranged at positions shifted from each other.

Similarly to the filling unit 40A, the filling unit 40B includes the first filling part 50 and the second filling part 52. A method of stacking the first filling part 50 and the second filling part 52 in the filling unit 40B is the same as that in the filling unit 40A. That is, the filling unit 40B has the same structure as that of the filling unit 40A.

In the filler 11B, the filling unit 40A and the filling unit 40B are stacked along the direction Z. Specifically, in the filler 11B, a bottom face opposite to the direction Z of the outer frame part 60 of the second filling part 52 included in the filling unit 40A is placed over an upper surface on the direction Z side of the outer frame part 60 of the first filling part 50 included in the filling unit 40B. The grid part 69 included in the filling unit 40A communicates with the grid part 69 included in the filling unit 40B. In the present embodiment, the filler 11B includes two filling units 40A and 40B, but there can be any number of filling units.

As illustrated in FIG. 3, in the filler 11B, the plate parts 62A included in the filling unit 40A are arranged to be located directly above each other in the direction X, and the plate parts 62B included in the filling unit 40B are arranged to be located directly above each other in the direction X. In other words, in the filler 11B, the plate part 62A included in the filling unit 40A is arranged on an extension line of the plate part 62A included in the filling unit 40B along the direction Z. In other words, a position of a center axis A1 along the direction Z of the plate part 62A included in the filling unit 40A is identical to a position of a center axis A2 along the direction Z of the plate part 62A included in the filling unit 40B.

As illustrated in FIG. 3, in the filler 11B, the plate parts 62B included in the filling unit 40A are arranged to be located directly above each other in the direction X, and the plate parts 62B included in the filling unit 40B are arranged are arranged to be located directly above each other in the direction X. In other words, in the filler 11B, the plate part 62B included in the filling unit 40B is arranged on an extension line of the plate part 62B included in the filling unit 40A along the direction Z. In other words, a position of a center axis A3 along the direction Z of the plate part 62B included in the filling unit 40A is identical to a position of a center axis A4 along the direction Z of the plate part 62B included in the filling unit 40B.

As illustrated in FIG. 4, in the filler 11B, the plate part 72A included in the filling unit 40A and the plate part 72A included in the filling unit 40B are arranged to be located directly above each other in the direction Y. In other words, in the filler 11B, the plate part 72A included in the filling unit 40B is arranged on an extension line of the plate part 72A included in the filling unit 40A along the direction Z. In other words, a position of a center axis B1 along the direction Z of the plate part 72A included in the filling unit 40A is identical to a position of a center axis B2 along the direction Z of the plate part 72A included in the filling unit 40B.

As illustrated in FIG. 4, in the filler 11B, the plate part 72B included in the filling unit 40A and the plate part 72B included in the filling unit 40B are arranged to be located directly above each other in the direction Y. In other words, in the filler 11B, the plate part 72B included in the filling unit 40B is arranged on an extension line of the plate part 72B included in the filling unit 40A along the direction Z. In other words, a position of a center axis B3 along the direction Z of the plate part 72B included in the filling unit 40A is identical to a position of a center axis B4 along the direction Z of the plate part 72B included in the filling unit 40B.

The filler 11B configured as described above is housed in the packed tower 11. The filler 11B is filled within the packed tower 11 so that the direction Z becomes a direction along an upper side of the vertical direction. In this case, the directions X and Y become horizontal directions orthogonal to the vertical direction. The upper end face 66 of the plate part 62 becomes an end face on an upper side in the vertical direction, and the upper end face 76 of the plate part 72 becomes an end face on an upper side in the vertical direction.

The filler attached to the inside of the packed tower 11 is required to enhance gas-liquid contact efficiency. In the filler 11B according to the first embodiment, the thickness of the plate parts 62 and 72 is reduced toward a lower side in the direction Z (vertical direction). Thus, in the filler 11B, a large amount of the seawater 15 sprinkled from an upper side in the vertical direction is rebounded by the plate parts 62 and 72. Drops of the seawater 15 are finely distributed by being rebounded. Accordingly, a surface area of the seawater 15 is increased, and when the seawater 15 is rebounded, time during which the seawater 15 remains in the filler 11B is increased. Thus, when an amount of the rebounded seawater 15 is increased, gas-liquid contact efficiency can be enhanced. The filler 11B is constituted of the plate parts 62 and 72 intersecting with each other, so that the structure thereof is simple. The following specifically describes rebounding of the seawater 15 by the plate parts 62 and 72.

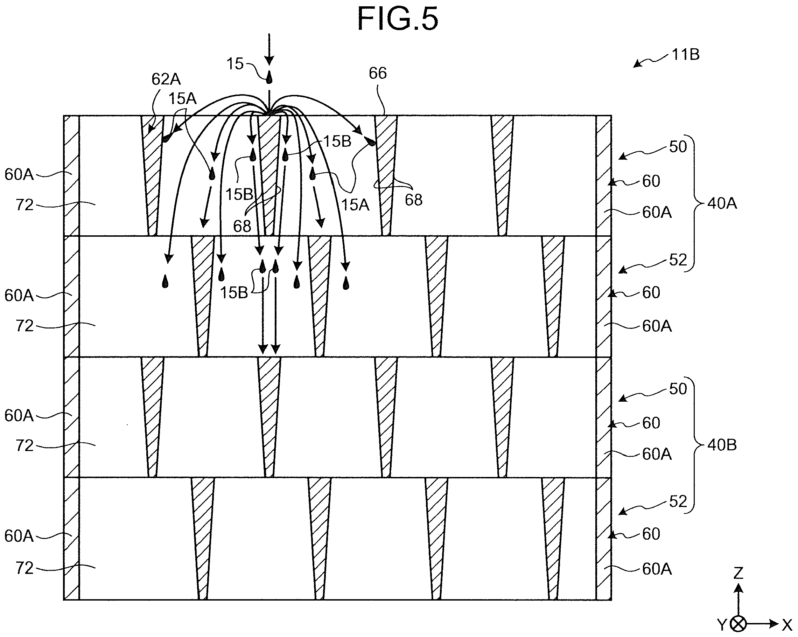

FIG. 5 is an explanatory diagram for explaining rebounding of the seawater. Similarly to FIG. 3, FIG. 5 is a cross-sectional view of the filler 11B viewed from the direction S in FIG. 2. In the example of FIG. 5, rebounding of seawater W by the plate part 62 is described. The plate part 72 exhibits the same effect, so that redundant description will not be repeated. As illustrated in FIG. 5, the seawater 15 is supplied to the filler 11B from an upper side in the direction Z (vertical direction). The upper end face 66 of the plate part 62 on the upper side in the vertical direction has a larger thickness than that of the lower end face 67. Thus, the seawater 15 tends to easily hit the upper end face 66 rather than a surface 68 of the plate part 62. When hitting the surface 68 extending along the vertical direction, the seawater 15 easily flows vertically downward along the surface 68. On the other hand, the upper end face 66 does not extend along the vertical direction, so that the seawater 15 can be easily rebounded when hitting the upper end face 66. Thus, due to the large thickness of the upper end face 66, the filler 11B can increase the rebounding amount of the seawater 15 to enhance gas-liquid contact efficiency. The rebounded seawater 15 may hit an adjacent plate part 62 or hit the plate part 62 on a lower side to be further rebounded, and gas-liquid contact efficiency is further enhanced.

The plate part 62B of the second filling part 52 is arranged on a lower side in the vertical direction of the plate part 62A of the first filling part 50. The plate part 62B of the second filling part 52 is arranged at a position shifted from the plate part 62A of the first filling part 50 along the direction X, that is, the horizontal direction. Thus, the seawater 15A rebounded from the plate part 62A of the first filling part 50 tends to easily hit the upper end face 66 of the plate part 62B of the second filling part 52. Thus, the seawater 15 tends to be rebounded more easily, and gas-liquid contact efficiency can be further enhanced.

The plate part 62A included in the filling unit 40B is arranged on a lower side in the vertical direction of the plate part 62A included in the filling unit 40A. The plate part 62A included in the filling unit 40B is arranged to be located directly above the plate part 62A included in the filling unit 40A in the direction X. That is, the plate part 62A included in the filling unit 40B is arranged on an extension line on a lower side in the vertical direction of the plate part 62A included in the filling unit 40A. Thus, the seawater 15B flowing on the surface 68 of the plate part 62A included in the filling unit 40A concentrates in a center direction of the plate part 62A along the surface 68 as flowing vertically downward, and is dropped onto the plate part 62A included in the filling unit 40B. The seawater 15B hits the upper end face 66 of the plate part 62A included in the filling unit 40B. Thus, the seawater 15 tends to be rebounded more easily, and gas-liquid contact efficiency can be further enhanced. In the present embodiment, the seawater 15 is brought into gas-liquid contact with the flue gas 22, but the embodiment is not limited thereto. Water may be used in place of the seawater.

As described above, the filler 11B according to the first embodiment is a filler for the packed tower 11 that is arranged inside the packed tower 11, causes water to pass therethrough when the water is sprinkled from an upper side in the vertical direction, causes the flue gas 22 to pass therethrough, and brings the flue gas 22 into contact with the water to be desulfurized. The filler 11B includes the first plate unit 64 and the second plate unit 74. The first plate unit 64 includes a plurality of plate parts 62 that extend in the direction Z (vertical direction), and are arranged at predetermined intervals. The second plate unit 74 includes a plurality of plate parts 72 that intersect with the plate part 62 of the first plate unit 64, extend in the direction Z (vertical direction), and are arranged at predetermined intervals. The second plate unit 74 forms, together with the first plate unit 64, the grid part 69 both end faces of which along the direction Z (vertical direction) are opened. The thickness of the plate part 62 is reduced from the upper end face 66 in the direction Z (vertical direction) toward the lower end face 67 in the direction Z (vertical direction).

The filler 11B is constituted of the plate parts 62 and 72. Thus, the filler 11B has a simple structure. In the filler 11B, the thickness of the upper end face 66 on the upper side in the vertical direction is larger than that of the lower end face 67. Thus, the filler 11B can increase the rebounding amount of the seawater 15 to enhance gas-liquid contact efficiency.

In the plate part 62, the upper end face 66 as an end face on the upper side in the direction Z (vertical direction) is perpendicular to the direction Z (vertical direction). When a hitting surface is along the vertical direction, the seawater 15 supplied from the upper side in the vertical direction tends to flow along the surface. On the other hand, as the hitting surface becomes nearly perpendicular to the vertical direction, the seawater 15 supplied from the upper side in the vertical direction tends to be rebounded more easily. In the filler 11B, the upper end face 66 is a face perpendicular to the vertical direction, so that the rebounding amount of the seawater 15 can be increased, and gas-liquid contact efficiency can be enhanced more appropriately.

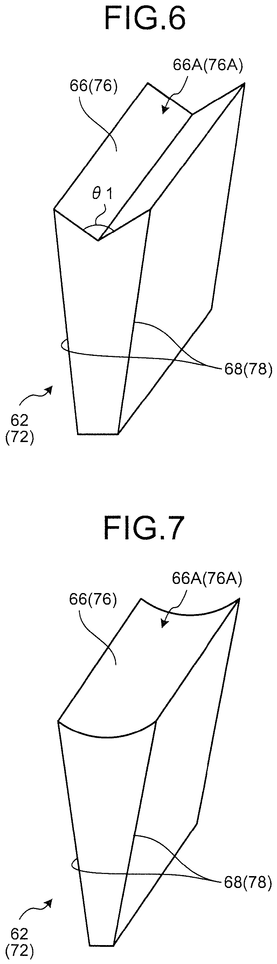

As illustrated in FIG. 6 and FIG. 7, the plate parts 62 and 72 may include groove parts 66A and 76A on the upper end faces 66 and 76. FIG. 6 and FIG. 7 are schematic diagrams illustrating another example of the plate part according to the first embodiment. The groove part 66A (76A) may have a V-shape in which two planes intersect with each other forming an angle θ1 as illustrated in FIG. 6, or may be formed with a curved surface as illustrated in FIG. 7. In either case, in the plate part 62, the groove part 66A can increase the rebounding amount of the seawater 15, and enhance gas-liquid contact efficiency more appropriately. The angle θ1 is preferably equal to or larger than 90 degrees and smaller than 180 degrees.

In the filler 11B, the first filling part 50 and the second filling part 52 are stacked along the direction Z (vertical direction). The plate part 62B of the first plate unit 64 included in the second filling part 52 is arranged at a position shifted from the position of the plate part 62A of the first plate unit 64 included in the first filling part 50 in the horizontal direction (direction X) perpendicular to the vertical direction. Thus, the filler 11B can cause the seawater 15A rebounded from the plate part 62A of the first filling part 50 to easily hit the plate part 62B of the second filling part 52. Thus, the filler 11B can further enhance gas-liquid contact efficiency.

In the filler 11B, a plurality of filling units including the first filling part 50 and the second filling part 52 are stacked along the vertical direction (direction Z). In the filling units adjacent to each other along the vertical direction, the plate parts 62A included in the first plate unit 64 of the first filling part 50 are arranged to be located directly above each other in the horizontal direction (direction X). In the filling units adjacent to each other along the vertical direction, the plate parts 62B included in the first plate unit 64 of the second filling part 52 are arranged to be located directly above each other in the horizontal direction. The filler 11B facilitates causing the seawater 15B flowing on the surface 68 of the plate part 62 to be dropped onto the plate part 62 included in the filling unit 40B. Thus, the filler 11B can further enhance gas-liquid contact efficiency.

### Second embodiment

Next, the following describes a second embodiment. A filler 11Ba according to the second embodiment is different from that in the first embodiment in that the plate part includes a projection part. Description about the same configuration in the second embodiment as that in the first embodiment will not be repeated.

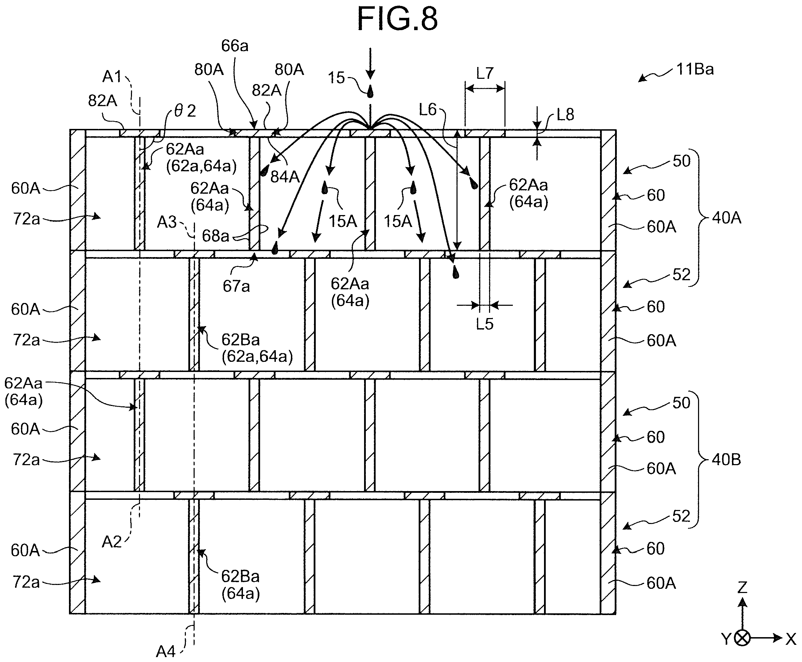

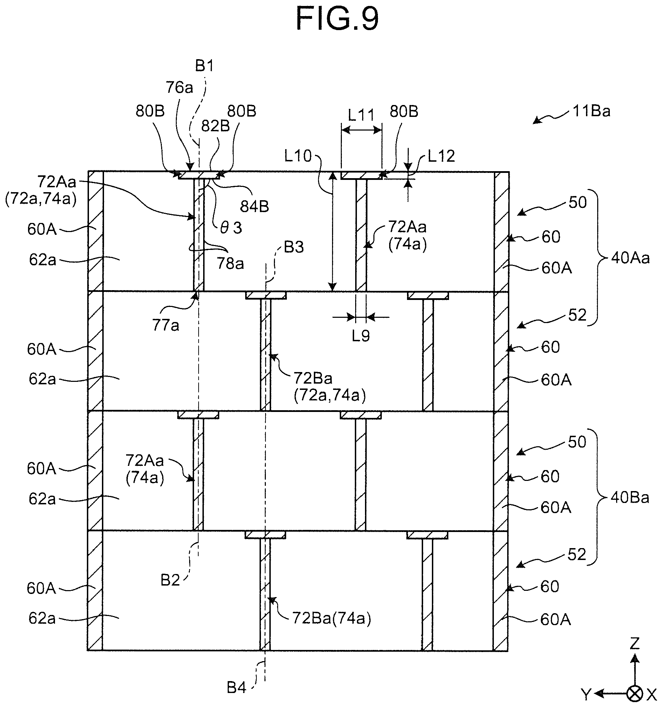

FIG. 8 and FIG. 9 are cross-sectional views of the filling part according to the second embodiment. As illustrated in FIG. 8, a first plate unit 64a of the first filling part 50 according to the second embodiment includes a plate part 62Aa. The first plate unit 64a of the second filling part 52 according to the second embodiment includes a plate part 62Ba. The plate part 62Aa and the plate part 62Ba, that is, a plate part 62a has a constant thickness from an upper end face 66a toward a lower end face 67a. That is, surfaces 68a on both sides along the direction X of the plate part 62a are along the direction Z (vertical direction). The plate part 62a includes a projection part 80A on each of the surfaces 68a on both sides. The projection part 80A extends from one side surface 62S to the other side surface 62T (refer to FIG. 2) of the plate part 62a in a direction away from the surface 68a. More specifically, the projection part 80A of the surface 68a on the direction X side extends toward the direction X, and the projection part 80A of the surface 68a on an opposite side of the direction X extends toward a direction opposite to the direction X.

The projection part 80A includes an upper surface 82A as a surface on the direction Z side (a surface on the upper side in the vertical direction), and a lower surface 84A as a surface opposite to the direction Z (a surface on the lower side in the vertical direction). The upper surface 82A is a surface perpendicular to the direction Z (vertical direction). That is, an angle θ2 between the upper surface 82A and the direction Z (vertical direction) is 90 degrees. However, the angle θ2 may be equal to or larger than 90 degrees and smaller than 180 degrees, and is more preferably equal to or larger than 90 degrees and smaller than 120 degrees. The lower surface 84A as a surface opposite to the direction Z of the projection part 80A (a surface on the lower side in the vertical direction) is also a surface perpendicular to the direction Z (vertical direction). The projection part 80A is arranged at the upper end face 66a of the plate part 62a, that is, arranged at an end part on the direction Z side of the plate part 62a.

The thickness of the plate part 62a, that is, the length along the direction X is assumed to be a length L5. The height of the plate part 62a, that is, the length along the direction Z is assumed to be a length L6. The width of the projection part 80A, that is, the length along the direction X is assumed to be a length L7. The height of the projection part 80A, that is, the length along the direction Z is assumed to be a length L8. The length L5 is equal to or larger than 1 mm and equal to or smaller than 5 mm. The length L6 is equal to or larger than 5 cm and equal to or smaller than 30 cm. The length L7 is equal to or larger than 1.5 mm and equal to or smaller than 50 mm, and is preferably equal to or larger than 1.5 times the length L5 and equal to or smaller than 10 times the length L5. The length L8 is equal to or larger than 1 mm and equal to or smaller than 5 cm. However, the lengths L5, L6, L7, and L8 are not limited to a value in this numerical range.

As illustrated in FIG. 9, a second plate unit 74a of the first filling part 50 according to the second embodiment includes a plate part 72Aa. The second plate unit 74a of the second filling part 52 according to the second embodiment includes a plate part 72Ba. The plate part 72Aa and the plate part 72Ba, that is, a plate part 72a has a constant thickness from an upper end face 76a toward a lower end face 77a. That is, surfaces 78a on both sides along the direction Y of the plate part 72a are along the direction Z (vertical direction). The plate part 72a includes a projection part 80B on each of the surfaces 78a on both sides. The projection part 80B extends from one side surface 72S to the other side surface 72T (refer to FIG. 2) of the plate part 72a in a direction away from the surface 78a. More specifically, the projection part 80B of the surface 78a on the direction Y side extends toward the direction Y, and the projection part 80B of the surface 78a on an opposite side of the direction Y extends toward a direction opposite to the direction Y.

The projection part 80B includes an upper surface 82B as a surface on the direction Z side (a surface on the upper side in the vertical direction), and a lower surface 84B as a surface opposite to the direction Z (a surface on the lower side in the vertical direction). The upper surface 82B is a surface perpendicular to the direction Z (vertical direction). That is, an angle θ3 between the upper surface 82B and the direction Z (vertical direction) is 90 degrees. However, the angle θ3 may be equal to or larger than 90 degrees and smaller than 180 degrees. The lower surface 84B is also a surface perpendicular to the direction Z (vertical direction). The projection part 80B is arranged at the upper end face 76a of the plate part 72a, that is, arranged at an end part on the direction Z side of the plate part 72a.

The thickness of the plate part 72a, that is, the length along the direction Y is assumed to be a length L9. The height of the plate part 72a, that is, the length along the direction Z is assumed to be a length L10. The width of the projection part 80B, that is, the length along the direction Y is assumed to be a length L11. The height of the projection part 80B, that is, the length along the direction Z is assumed to be a length L12. The length L9 is equal to or larger than 1 mm and equal to or smaller than 5 mm. The length L10 is equal to or larger than 5 cm and equal to or smaller than 30 cm. The length L11 is equal to or larger than 1.5 mm and equal to or smaller than 50 mm, and is preferably equal to or larger than 1.5 times the length L5 and equal to or smaller than 10 times the length L5. The length L12 is equal to or larger than 1 mm and equal to or smaller than 5 cm. However, the lengths L9, L10, L11, and L12 are not limited to a value in this numerical range.

The filler 11Ba according to the second embodiment includes the projection parts 80A and 80B, so that the filler 11Ba can enhance gas-liquid contact efficiency with a simple structure similarly to the filler 11B according to the first embodiment. As illustrated in FIG. 8, the projection part 80A of the plate part 62a projects from the surface 68a of the plate part 62a along the direction X. The angle between the upper surface 82A of the projection part 80A and the direction Z (vertical direction) is equal to or larger than 90 degrees and smaller than 180 degrees. In this way, the projection part 80A projects from the plate part 62a. Thus, the seawater 15 tends to easily hit the upper surface 82A of the projection part 80A rather than the surface 68a of the plate part 62a. The upper surface 82A of the projection part 80A forms an angle equal to or larger than 90 degrees and smaller than 180 degrees with respect to the vertical direction. Thus, the seawater 15 tends to be easily rebounded when hitting the upper surface 82A. The rebounded seawater 15 tends to easily hit the plate part 62Ba of the second filling part 52 at a position shifted along the direction Y. Thus, the filler 11Ba includes the projection part 80A, so that the rebounding amount of the seawater 15 can be increased, and gas-liquid contact efficiency can be enhanced. The projection part 80B has the same effect as that of the projection part 80A. However, the filler 11Ba may include at least one of the projection parts 80A and 80B.

As described above, the filler 11Ba according to the second embodiment is a filler for the packed tower 11 that is arranged inside the packed tower 11, causes water to pass therethrough when the water is sprinkled from an upper side in the vertical direction, causes the flue gas 22 to pass therethrough, and brings the flue gas 22 into contact with the water to be desulfurized. The filler 11B includes the first plate unit 64 and the second plate unit 74. The first plate unit 64 includes a plurality of plate parts 62a that extend in the direction Z (vertical direction), and are arranged at predetermined intervals. The second plate unit 74 includes a plurality of plate parts 72a that intersect with the plate part 62 of the first plate unit 64, extend in the direction Z (vertical direction), and are arranged at predetermined intervals. The second plate unit 74 forms, together with the first plate unit 64, the grid part 69 both end faces of which along the direction Z (vertical direction) are opened. The plate part 62a includes the projection part 80A. The projection part 80A extends in a direction away from the surface 68a from one side part (side surface 62S) to the other side part (side surface 62T) of the plate part 62a on both surfaces 68a extending in the direction Z (vertical direction). The angle between the surface on the upper side in the vertical direction (upper surface 82A) of the projection part 80A and the vertical direction (direction Z) is equal to or larger than 90 degrees and smaller than 180 degrees.

In the filler 11Ba, the projection part 80A can increase the rebounding amount of the seawater 15 and enhance gas-liquid contact efficiency.

The projection part 80A is arranged at the upper end face 66a in the vertical direction of the plate part 62a. Thus, the filler 11Ba can cause a larger amount of seawater 15 to hit the projection part 80A, and the rebounding amount can be increased to enhance gas-liquid contact efficiency more appropriately.

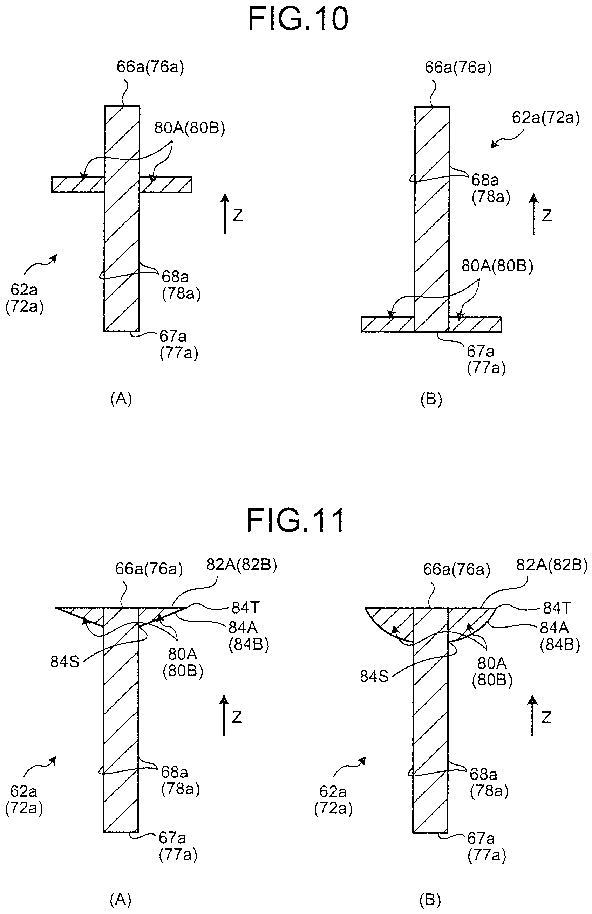

The projection part 80A according to the second embodiment is arranged on the upper end face 66a side of the plate part 62a, and the upper surface 82A and the lower surface 84A are perpendicular to the direction Z. However, the embodiment is not limited thereto. FIGS. 10 to 12 are diagrams illustrating another configuration example of the projection part according to the second embodiment. The following describes another example of the projection part 80A. The projection part 80B can have the same shape as that of the projection part 80A, so that the description thereof is omitted.

As illustrated in FIG. 10, the projection part 80A can be at any position in the direction Z so long as the projection part 80A is arranged on the surface 68a of the plate part 62a. For example, as illustrated in (A) of FIG. 10, the projection part 80A may be arranged between the upper end face 66a and the lower end face 67a. As illustrated in (B) of FIG. 10, the projection part 80A may be arranged at the lower end face 67a.

As illustrated in FIG. 11, the lower surface 84A of the projection part 80A may be tilted toward the direction Z (upper side in the vertical direction) from a terminal part 84S connected to the plate part 62a toward a distal end part 84T. Due to this, the seawater 15 flowing along the projection part 80A can be caused to flow toward the center, and the seawater 15 can be caused to appropriately hit the plate part 62a immediately below in the vertical direction. For example, as illustrated in (A) of FIG. 11, the lower surface 84A may be a plane tilted toward the direction Z. As illustrated in (B) of FIG. 11, the lower surface 84A may be a curved surface bulging toward a direction opposite to the direction Z.

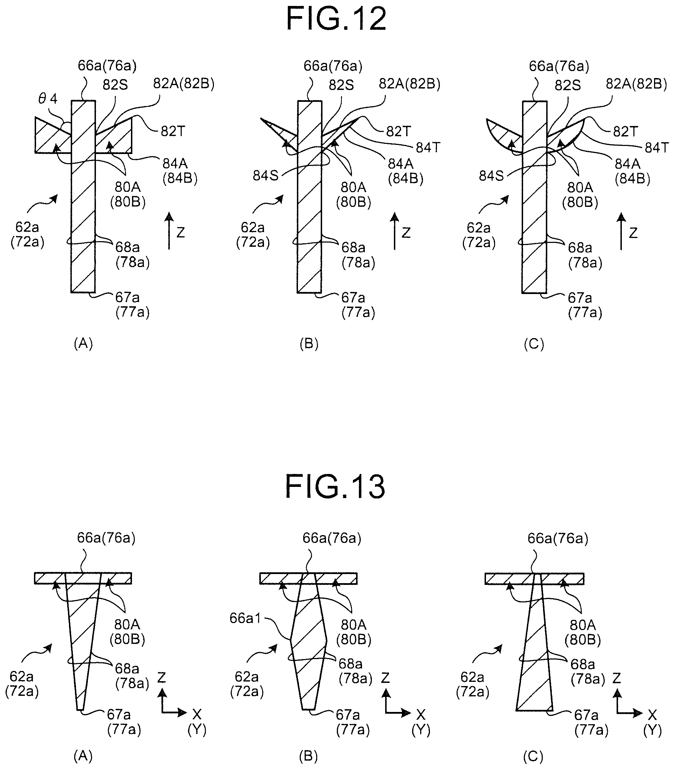

As illustrated in FIG. 12, the upper surface 82A of the projection part 80A may be tilted toward the direction Z (upper side in the vertical direction) from a terminal part 82S connected to the plate part 62a toward a distal end part 82T. When the upper surface 82A is tilted toward the direction Z, the projection part 80A can increase the rebounding amount of the seawater 15 to enhance gas-liquid contact efficiency more appropriately. An angle θ4 between the upper surface 82A and the surface 68a of the plate part 62a is preferably equal to or larger than 60 degrees and smaller than 90 degrees. For example, as illustrated in (A) of FIG. 12, the lower surface 84A may be a plane tilted toward the direction Z, or a curved surface bulging toward a direction opposite to the direction Z. As illustrated in (B) and (C) of FIG. 12, the lower surface 84A may also be tilted in the direction Z in addition to the upper surface 82A.

The thickness, that is, the length along the direction X of the plate part 62a is constant from the upper end face 66a toward the lower end face 67a. However, the thickness of the plate part 62a may vary from the upper end face 66a toward the lower end face 67a. FIG. 13 is a schematic diagram illustrating another example of the plate part according to the second embodiment. As illustrated in (A) of FIG. 13, the thickness of the plate part 62a may be reduced from an upper part in the direction Z (vertical direction) (upper end face 66a) toward a lower part in the direction Z (vertical direction) (lower end face 67a). That is, the plate part 62a in (A) of FIG. 13 is the plate part 62a according to the first embodiment. In other words, the plate part 62 (72) according to the first embodiment may include the projection part 80A (80B) according to the second embodiment.

As illustrated in (B) of FIG. 13, the thickness of the plate part 62a may be increased from the upper end face 66a toward an intermediate part 66a1, and the thickness thereof may be reduced from the intermediate part 66a1 toward the lower end face 67a. The intermediate part 66a1 is an optional position between the upper end face 66a and the lower end face 67a of the plate part 62a. As illustrated in (C) of FIG. 13, the thickness of the plate part 62a may be increased from the upper end face 66a toward the lower end face 67a.

### Third embodiment

Next, the following describes a third embodiment. A filler 11Bb according to the third embodiment is different from that in the first embodiment in that the filler 11Bb includes an opening plate part 90. Description about the same configuration in the third embodiment as that in the first embodiment will not be repeated.

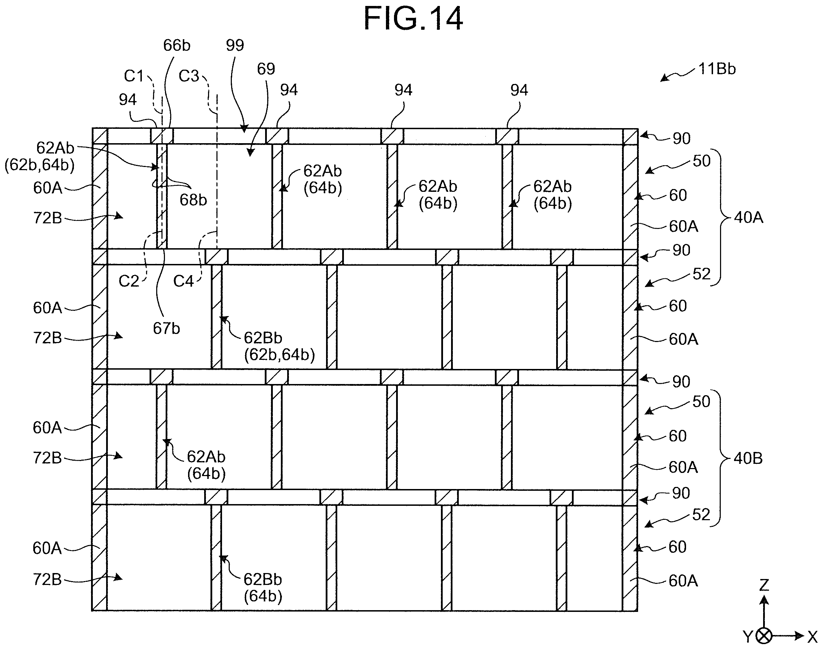

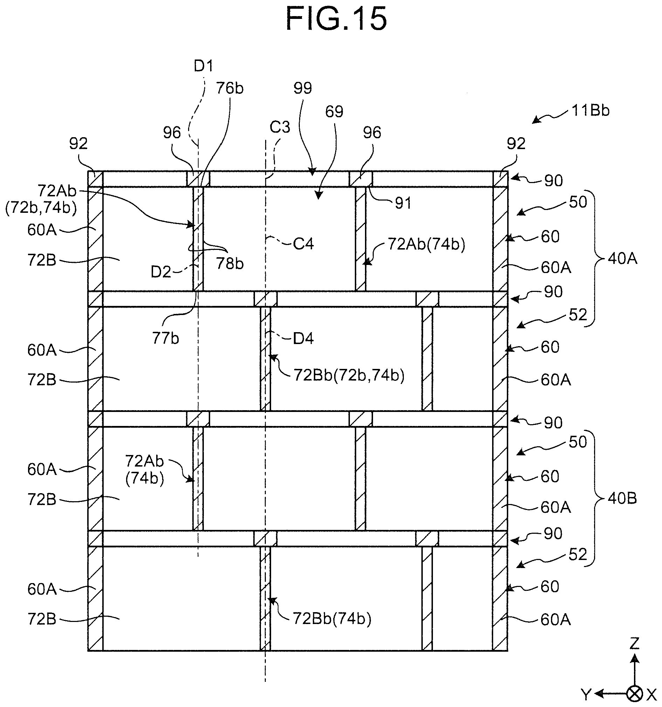

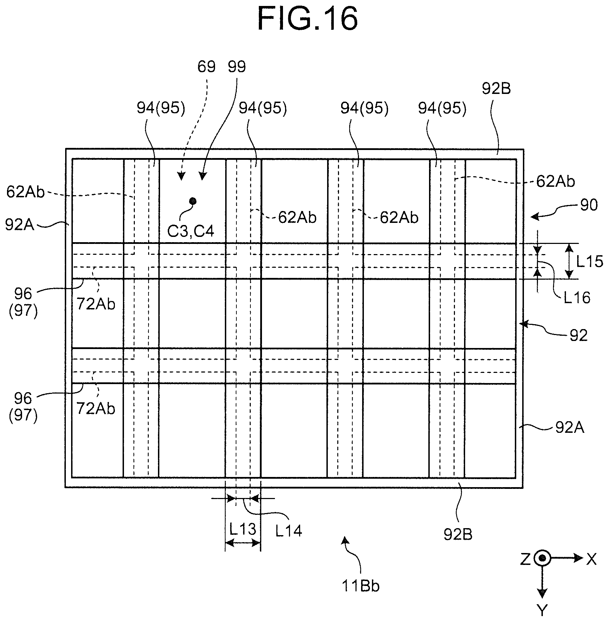

FIGS. 14 and 15 are cross-sectional views of the filling part according to the third embodiment. FIG. 16 is a top view of the filling part according to the third embodiment. As illustrated in FIG. 14, a first plate unit 64b of the first filling part 50 according to the third embodiment includes a plate part 62Ab. The first plate unit 64b of the second filling part 52 according to the third embodiment includes a plate part 62Bb. The plate part 62Ab and the plate part 62Bb, that is, a plate part 62b has a constant thickness from an upper end face 66b toward a lower end face 67b. That is, surfaces 68b on both sides along the direction X of the plate part 62b are along the direction Z (vertical direction).

As illustrated in FIG. 15, a second plate unit 74b of the first filling part 50 according to the third embodiment includes a plate part 72Ab. A second plate unit 74b of the second filling part 52 according to the third embodiment includes a plate part 72Bb. The plate part 72Ab and the plate part 72Bb, that is, a plate part 72b has a constant thickness from an upper end face 76b toward a lower end face 77b. That is, surfaces 78b on both sides along the direction Y of the plate part 72b are along the direction Z (vertical direction).

The filler 11Bb includes the opening plate part 90. As illustrated in FIG. 16, the opening plate part 90 includes an outer frame part 92, a first thin plate unit 95, and a second thin plate unit 97. The outer frame part 92 includes a first outer frame part 92A and a second outer frame part 92B. The first outer frame part 92A is a plate-shaped member extending along the direction Y. Two first outer frame parts 92A are opposed to each other in the direction X. The second outer frame part 92B is a plate-shaped member extending along the direction X. Two second outer frame parts 92B are opposed to each other along the direction Y. In the outer frame part 92, a space surrounded by the two first outer frame parts 92A and the two second outer frame parts 92B has a rectangular shape. The length of the first outer frame part 92A along the direction Y is the same as that of the first outer frame part 60A of the first filling part 50 (refer to FIG. 2). The length along the direction X of the second outer frame part 92B is the same as that of the second outer frame part 60B of the first filling part 50 (refer to FIG. 2).

The first thin plate unit 95 includes a thin plate part 94. The thin plate part 94 is a plate-shaped member extending along the direction Y from one of the second outer frame parts 92B to the other one of the second outer frame parts 92B. Surfaces on both sides of the thin plate part 94 along the direction Z side are planes, which are perpendicular to the direction Z. A length L13 along the direction X of the thin plate part 94 is longer than the thickness (length) along the direction X of the plate part 62b. The length L13 is equal to or larger than 1.5 mm and equal to or smaller than 50 mm, and the length L14 is equal to or larger than 1.5 mm and equal to or smaller than 50 mm.

In the first thin plate unit 95, a plurality of thin plate parts 94 are arranged at predetermined intervals along the direction X. The number of thin plate parts 94 is the same as the number of plate parts 62b.

The second thin plate unit 97 includes a thin plate part 96. The thin plate part 96 is a plate-shaped member extending along the direction X from one of the first outer frame parts 92A to the other one of the first outer frame parts 92A. Surfaces on both sides of the thin plate part 96 along the direction Z side are planes, which are perpendicular to the direction Z. A length L15 along the direction Y of the thin plate part 96 is longer than the thickness (length) along the direction Y of the plate part 72b. The length L15 is equal to or larger than 1.5 mm and equal to or smaller than 50 mm, and the length L16 is equal to or larger than 1.5 mm and equal to or smaller than 50 mm.

In the second thin plate unit 97, a plurality of thin plate parts 96 are arranged at predetermined intervals along the direction Y. The number of thin plate parts 96 is the same as the number of plate parts 72b. The first thin plate unit 95 and the second thin plate unit 97 form an opening 99 as a space surrounded by two thin plate parts 94 and two thin plate parts 96. In the opening 99, side surfaces along the directions X and Y are surrounded by the thin plate parts 94 and 96, and both end parts along the direction Z are opened.

The opening plate part 90 is a plate-shaped member having a plane surface perpendicular to the direction Z, and it can be said that a plurality of openings 99 penetrate the surface in a grid-like fashion (two-dimensional matrix). As illustrated in FIG. 14 and FIG. 15, the length along the direction Z of the opening plate part 90 is shorter than the length along the direction Z of the plate parts 62 and 72. In other words, the length along the direction Z of the opening plate part 90 is shorter than the length along the direction Z of the first filling part 50, and shorter than the length along the direction Z of the second filling part 52.

The number of openings 99 is the same as the number of grid parts 69 included in the first filling part 50, and the number of grid parts 69 included in the second filling part 52. A pitch of the opening 99 is the same as a pitch of the grid part 69. That is, a distance between center axes along the direction Z of adjacent openings 99 is the same as a distance between center axes along the direction Z of adjacent grid parts 69. However, the length along the direction X and the direction Y of the opening 99 is shorter than the length along the direction X and the direction Y of the grid part 69.

As illustrated in FIG. 14 and FIG. 15, a plurality of opening plate parts 90 described above are stacked along the direction Z together with the first filling part 50 and the second filling part 52. The opening plate part 90 is arranged on the direction Z side (upper side in the vertical direction) of the first filling part 50. The opening plate part 90 is also arranged between the first filling part 50 and the second filling part. That is, the first filling part 50 and the second filling part 52 are stacked along the vertical direction with the opening plate part 90 interposed therebetween. The filling unit 40A and the filling unit 40B are stacked along the vertical direction with the opening plate part 90 interposed therebetween.

As illustrated in FIG. 14, the thin plate part 94 of the opening plate part 90 is arranged on the upper end face 66b of the plate part 62b adjacent to the opposite side of the direction Z. Herein, the plate part 62b included in the first filling part 50 or the second filling part 52 adjacent to the opening plate part 90 on the opposite side of the direction Z (lower side in the vertical direction) is referred to as a first adjacent plate part. In the filler 11Bb, the thin plate part 94 included in the opening plate part 90 and the first adjacent plate part are arranged to be located directly above each other in the direction X. In other words, in the filler 11Bb, the first adjacent plate part is arranged on an extension line of the thin plate part 94 along the direction Z. In other words, a position of a center axis C1 along the direction Z of the thin plate part 94 is identical to that of a center axis C2 of the first adjacent plate part. A center axis of the opening 99 of the opening plate part 90 is assumed to be a center axis C3, and a center axis of the grid part 69 formed by the first filling part 50 or the second filling part 52 adjacent to the opposite side of the direction Z (lower side in the vertical direction) of the opening plate part 90 is assumed to be a center axis C4. In this case, it can be said that a position of the center axis C3 is identical to that of the center axis C4. The opening 99 communicates with the grid part 69.

As illustrated in FIG. 15, the thin plate part 96 of the opening plate part 90 is arranged on the upper end face 76b of the plate part 72b adjacent to the opposite side of the direction Z. Herein, the plate part 72b included in the first filling part 50 or the second filling part 52 adjacent to the opening plate part 90 on the opposite side of the direction Z (lower side in the vertical direction) is referred to as a second adjacent plate part. In the filler 11Bb, the thin plate part 96 included in the opening plate part 90 and the second adjacent plate part are arranged to be located directly above each other in the direction Y. In other words, in the filler 11Bb, the second adjacent plate part is arranged on an extension line of the thin plate part 96 along the direction Z. In other words, it can be said that a position of a center axis D1 along the direction Z of the thin plate part 96 is identical to that of a center axis D2 of the second adjacent plate part.

As described above, the filler 11Bb according to the third embodiment is a filler for the packed tower 11 that is arranged inside the packed tower 11, causes water to pass therethrough when the water is sprinkled from an upper side in the vertical direction, causes the flue gas 22 to pass therethrough, and brings the flue gas 22 into contact with the water to be desulfurized. The filler 11Bb includes the first filling part 50, the second filling part 52, and the opening plate part 90. The opening plate part 90 is a plate-shaped member having a plane surface, and a plurality of openings 99 are opened on the surface thereof in a grid-like fashion. The first filling part 50 and the second filling part 52 are stacked along the direction Z (vertical direction) with the opening plate part 90 interposed therebetween. A distance between center axes of adjacent openings 99 is equal to a distance between center axes of adjacent grid parts 69. The thickness between a side surface of the opening 99 and a side surface of the adjacent opening 99, that is, the length L13 of the thin plate part 94 is larger than the thickness of the plate part 62b, that is, the length L14.

In the filler 11Bb, the length L13 of the thin plate part 94 is longer than the length L14 of the plate part 62b. In the filler 11Bb, the pitch of the opening 99 (distance between the center axes) is equal to the pitch of the grid part 69. Thus, the seawater 15 tends to easily hit the opening plate part 90, so that the filler 11Bb can increase the rebounding amount of the seawater 15 to enhance gas-liquid contact efficiency. Thus, with the filler 11Bb, gas-liquid contact efficiency can be efficiently enhanced with a simple structure.

The length along the direction Z (vertical direction) of the opening plate part 90 is shorter than the length along the vertical direction of the first filling part 50 and the second filling part 52. That is, in the filler 11Bb, the opening plate parts 90 having a small thickness and a simple structure are stacked. Thus, with the filler 11Bb, gas-liquid contact efficiency can be efficiently enhanced with a simpler structure.

In the filler 11Bb, the center axis C3 of the opening 99 is identical to the center axis C4 of the grid part 69 of the first filling part 50 or the second filling part 52 adjacent to the opposite side of the direction Z (lower side in the vertical direction). In this case, in the filler 11Bb, the thin plate part 94 is arranged to cover the upper side in the vertical direction of the plate part 62b. Thus, in the filler 11Bb, the seawater 15 tends to easily hit the opening plate part 90, so that the rebounding amount of the seawater 15 can be increased to enhance gas-liquid contact efficiency.

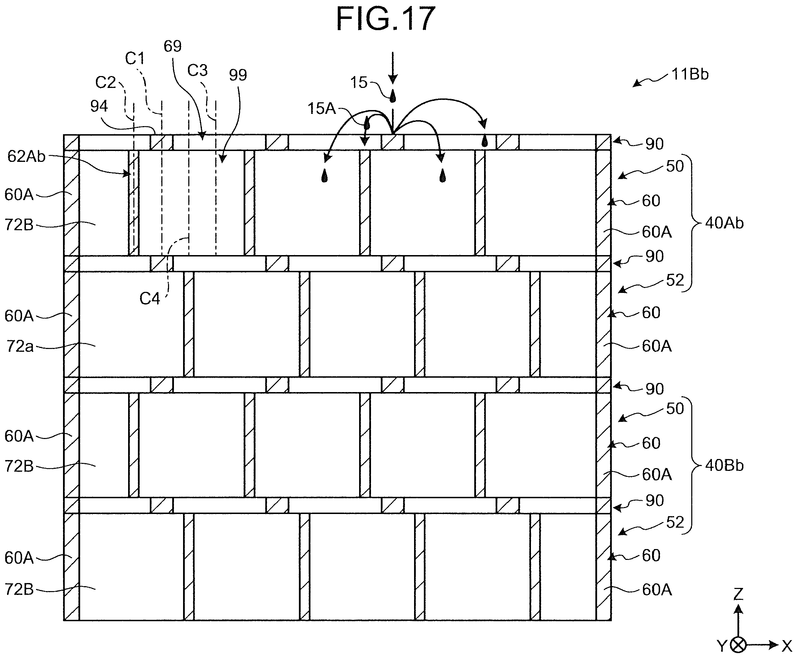

FIG. 17 is a diagram illustrating another example of the filler according to the third embodiment. As illustrated in FIG. 17, in the filler 11Bb, the position of the center axis C3 of the opening 99 may be shifted from that of the center axis C4 of the grid part 69 of the first filling part 50 or the second filling part 52 adjacent to the opposite side of the direction Z (lower side in the vertical direction). In this case, the thin plate part 94 is arranged at a position shifted from the plate part 62b in the direction X. Also in this case, as illustrated in FIG. 17, the seawater 15A that has hit the thin plate part 94 tends to easily hit the upper end face 66b of the plate part 62b. Thus, even if the positions of the center axes C3 and C4 are shifted from each other as described above, the filler 11Bb can increase the rebounding amount of the seawater 15 to enhance gas-liquid contact efficiency.

The opening plate part 90 according to the third embodiment may be attached to the filler 11B according to the first embodiment and the filler 11Ba according to the second embodiment using the same method.

The embodiments of the present invention have been described above. However, the embodiments are not limited thereto. The components described above include a component that is easily conceivable by those skilled in the art, substantially the same component, and what is called an equivalent. The components described above can also be appropriately combined with each other. In addition, the components can be variously omitted, replaced, or modified without departing from the gist of the embodiments described above. For example, the filler 11B (the first filling part 50 and the second filling part 52) according to the first embodiment includes the outer frame part 60 (the first outer frame part 60A and the second outer frame part 60B), but does not necessarily include the outer frame part 60. In this case, in the filler 11B, members in which the first plate unit 64 intersects with the second plate unit 74 (the first filling part 50 and the second filling part 52) are stacked. Similarly, the filler 11Ba according to the second embodiment and the filler 11Bb according to the third embodiment do not necessarily include the outer frame part 60. The opening plate part 90 according to the third embodiment does not necessarily include the outer frame part 92 (the first outer frame part 92A and the second outer frame part 92B).

### Reference Signs List

10 Seawater desulfurization device (desulfurization device)
11 Packed tower
11A Sprinkler device
11B Filler
15 Seawater (water)
40A, 40B Filling unit
50 First filling part
52 Second filling part
62, 62A, 62B, 72, 72A, 72B Plate part
64 First plate unit
66, 76 Upper end face
67, 77 Lower end face
74 Second plate unit

## Claims

1. A filler for a packed tower that causes water to pass through the filler when the water is sprinkled from an upper side in a vertical direction, and causes flue gas to pass through the filler, to bring the flue gas into contact with the water to desulfurize the flue gas, the filler being arranged inside the packed tower, the filler comprising:
a first plate unit including a plurality of plate parts that extend in the vertical direction and are arranged at predetermined intervals; and
a second plate unit including a plurality of plate parts that intersect with the plate parts of the first plate unit, extend in the vertical direction, and are arranged at predetermined intervals, the second plate unit forming, together with the first plate unit, a grid part both end parts of which along the vertical direction are opened, wherein
a thickness of each plate part is reduced from an upper end face in the vertical direction toward a lower end face.

2. The filler for a packed tower according to claim 1, wherein an end face of the plate part on an upper side in the vertical direction is perpendicular to the vertical direction.

3. The filler for a packed tower according to claim 1 or 2, wherein the plate part includes a groove part on an end face on an upper side in the vertical direction.

4. The filler for a packed tower according to any one of claims 1 to 3, wherein
a first filling part including the first plate unit and the second plate unit, and a second filling part including the first plate unit and the second plate unit are stacked along the vertical direction, and
a plate part of the first plate unit included in the second filling part is arranged at a position shifted from a position of a plate part of the first plate unit included in the first filling part in a horizontal direction perpendicular to the vertical direction.

5. The filler for a packed tower according to claim 4, wherein
a plurality of filling units each including the first filling part and the second filling part are stacked along the vertical direction, and
in the filling units adjacent to each other along the vertical direction, plate parts included in the first plate unit of the first filling part are arranged to be located directly above each other in the horizontal direction, and plate parts included in the first plate unit of the second filling part are arranged to be located directly above each other in the horizontal direction.

6. The filler for a packed tower according to any one of claims 1 to 5, wherein the plate part includes a projection part on each of surfaces extending in the vertical direction, the projection part extending from one side surface to the other side surface of the plate part in a direction away from the surface.

7. A filler for a packed tower that causes water to pass through the filler when the water is sprinkled from an upper side in a vertical direction, and causes flue gas to pass through the filler, to bring the flue gas into contact with the water to desulfurize the flue gas, the filler being arranged inside the packed tower, the filler comprising:
a first plate unit including a plurality of plate parts that extend in the vertical direction and are arranged at predetermined intervals; and
a second plate unit including a plurality of plate parts that intersect with the plate parts of the first plate unit, extend in the vertical direction, and are arranged at predetermined intervals, the second plate unit forming, together with the first plate unit, a grid part both end parts of which along the vertical direction are opened, wherein
the plate part includes a projection part on each of surfaces extending in the vertical direction, the projection part extending from one side part to the other side part of the plate part in a direction away from the surface, and
an angle between an upper surface of the projection part in the vertical direction and the vertical direction is equal to or larger than 90 degrees and smaller than 180 degrees.

8. The filler for a packed tower according to claim 7, wherein the projection part is arranged on an upper end face of the plate part in the vertical direction.

9. The filler for a packed tower according to claim 7 or 8, wherein a lower surface of the projection part in the vertical direction is tilted upward in the vertical direction from a terminal part connected to the plate part toward a distal end part.

10. A filler for a packed tower that causes water to pass through the filler when the water is sprinkled from an upper side in a vertical direction, and causes flue gas to pass through the filler, to bring the flue gas into contact with the water to desulfurize the flue gas, the filler being arranged inside the packed tower, the filler comprising:
a first filling part that includes
a first plate unit including a plurality of plate parts that extend in the vertical direction and are arranged at predetermined intervals, and
a second plate unit including a plurality of plate parts that intersect with the plate parts of the first plate unit, extend in the vertical direction, and are arranged at predetermined intervals, the second plate unit forming, together with the first plate unit, a grid part both end parts of which along the vertical direction are opened;
a second filling part that includes the first plate unit and the second plate unit; and
an opening plate part as a plate-shaped member having a plane surface in which a plurality of openings penetrate in a grid-like fashion, wherein
the first filling part and the second filling part are stacked along the vertical direction across the opening plate part, and
a distance between center axes of the openings adjacent to each other is equal to a distance between center axes of grid parts adjacent to each other, and a thickness between a side surface of the opening and a side surface adjacent to the opening is larger than a thickness of the plate part.

11. The filler for a packed tower according to claim 10, wherein a length of the opening plate part along the vertical direction is shorter than a length of the first filling part and the second filling part along the vertical direction.

12. The filler for a packed tower according to claim 10 or 11, wherein the center axis of the opening in the opening plate part is identical to the center axis of the grid part of the first filling part or the second filling part adjacent to the opening on a lower side in a vertical direction.

13. The filler for a packed tower according to claim 10 or 11, wherein the center axis of the opening in the opening plate part is arranged to be shifted from a position of the center axis of the grid part of the first filling part or the second filling part adjacent to the opening on a lower side in a vertical direction.

14. A seawater desulfurization device for flue gas, comprising the filler for a packed tower according to any one of claims 1 to 13.

## Amended claims

### Amended claims under Art. 19.1 PCT

1. (Amended) A filler for a packed tower, arranged inside the packed tower, the filler comprising:
filling units each including a first filling part that includes plate parts forming a grid part, and a second filling part that includes plate parts forming a grid part so that the first filling part and the second filling part are stacked along a vertical direction, the filling units being stacked along the vertical direction, wherein
the plate part of the first filling part of one of the filling units are arranged to be located directly above the plate part of the first filling part of another filling unit, when viewed from the vertical direction,
each plate part of the first filling part of the filling unit is arranged at a position shifted from a position of each plate part of the second filling part of the filling unit in a horizontal direction, and
in each plate part included in the first filling part and the second filling part of the filling unit, a thickness at an upper end face in the vertical direction is larger than a thickness at a lower end face in the vertical direction.

2. (Amended) The filler for a packed tower according to claim 1, wherein the upper end face of the plate part is perpendicular to the vertical direction.

3. (Amended) The filler for a packed tower according to claim 1 or 2, wherein the plate part includes a groove part on the upper end face.

4. (Cancelled)

5. (Cancelled)

6. (Amended) The filler for a packed tower according to any one of claims 1 to 3, wherein the plate part includes a projection part on each of surfaces extending in the vertical direction, the projection part extending from one side surface to the other side surface of the plate part in a direction away from the surface.

7. (Amended) A filler for a packed tower, arranged inside the packed tower, the filler comprising:
filling units each including a first filling part that includes plate parts forming a grid part, and a second filling part that includes plate parts forming a grid part so that the first filling part and the second filling part are stacked along a vertical direction, the filling units being stacked along the vertical direction, wherein
the plate part of the first filling part of one of the filling units are arranged to be located directly above the plate part of the first filling part of another filling unit, when viewed from the vertical direction,
each plate part of the first filling part of the filling unit is arranged at a position shifted from a position of each plate part of the second filling part of the filling unit in a horizontal direction, and
the plate part included in the first filling part and the second filling part of the filling unit includes a projection part on each of surfaces extending in the vertical direction, the projection part extending from one side part to the other side part of the plate part in a direction away from the surface, and
an angle between an upper surface of the projection part in the vertical direction and the vertical direction is equal to or larger than 90 degrees and smaller than 180 degrees.

8. The filler for a packed tower according to claim 7, wherein the projection part is arranged on an upper end face of the plate part in the vertical direction.

9. The filler for a packed tower according to claim 7 or 8, wherein a lower surface of the projection part in the vertical direction is tilted upward in the vertical direction from a terminal part connected to the plate part toward a distal end part.

10. (Amended) A filler for a packed tower, arranged inside the packed tower, the filler comprising:
filling units each including a first filling part that includes plate parts forming a grid part, and a second filling part that includes plate parts forming a grid part so that the first filling part and the second filling part are stacked across an opening plate part inside the packed tower along a vertical direction, the filling units being stacked along the vertical direction, wherein
the plate part of the first filling part of one of the filling units are arranged to be located directly above the plate part of the first filling part of another filling unit, when viewed from the vertical direction,
each plate part of the first filling part of the filling unit is arranged at a position shifted from a position of each plate part of the second filling part of the filling unit in a horizontal direction,
the opening plate part is a plate-shaped member having a plane surface in which a plurality of openings penetrate in a grid-like fashion, and
a distance between center axes of the openings adjacent to each other is equal to a distance between center axes of grid parts adjacent to each other, and a thickness between a side surface of the opening and a side surface adjacent to the opening is larger than a thickness of the plate part.

11. The filler for a packed tower according to claim 10, wherein a length of the opening plate part along the vertical direction is shorter than a length of the first filling part and the second filling part along the vertical direction.

12. The filler for a packed tower according to claim 10 or 11, wherein the center axis of the opening in the opening plate part is identical to the center axis of the grid part of the first filling part or the second filling part adjacent to the opening on a lower side in a vertical direction.

13. The filler for a packed tower according to claim 10 or 11, wherein the center axis of the opening in the opening plate part is arranged to be shifted from a position of the center axis of the grid part of the first filling part or the second filling part adjacent to the opening on a lower side in a vertical direction.

14. (Amended) A seawater desulfurization device for flue gas, comprising the filler for a packed tower according to any one of claims 1 to 3 and 6 to 13.

Statement under Art. 19.1 PCT
Claim 1 is amended to limit the arrangement of the plate parts and modify the language accordingly.

Claims 2 and 3 are amended to modify their language.

Claims 4 and 5 are cancelled.

Claim 6 is amended to change its dependency according to the cancellation of claims 4 and 5.

Claim 7 is amended to limit the arrangement of the plate parts and modify the language accordingly.

Claim 10 is amended to limit the arrangement of the plate parts and modify the language accordingly.

Claim 14 is amended to change its dependency according to the cancellation of claims 4 and 5.
